# EUROPEAN PATENT APPLICATION

(11) **EP 4 831 504 A1**
(43) Date of publication of application: **28.10.2026**
(21) Application number: 24909905.2
(22) Date of filing: 27.08.2024
(51) Int. Cl.: F16F 9/34, F16F 9/44, F16K 31/06, F16K 1/36

(54) **VALVE, SHOCK ABSORBER, CHASSIS, AND VEHICLE**

(30) Priority: 25.12.2023 CN 202323577880 U
(71) Applicant: BYD Company Limited, Shenzhen, Guangdong 518118 (CN)
(72) Inventor: LU, Jieyu, Shenzhen, Guangdong 518118 (CN); LUO, Jiarong, Shenzhen, Guangdong 518118 (CN); WANG, Yiming, Shenzhen, Guangdong 518118 (CN)
(74) Representative: Taor, Simon Edward William
(86) International application number: PCT/CN2024/114882
(87) International publication number: WO 2025/138955

(57) **Abstract**

A vehicle is provided. The vehicle includes a chassis. The chassis includes a shock absorber. The shock absorber includes a valve. The valve includes a valve body, a valve core mating member, a first valve core, and an elastic member. An inlet and an outlet are formed on the valve body. The valve core mating member is disposed in the valve body. The first valve core is movably disposed in the valve core mating member. The elastic member is disposed between the first valve core and the valve core mating member. The elastic member normally urges the first valve core toward the inlet to normally block communication between the inlet and the outlet.

## Description

### CROSS-REFERENCE TO RELATED APPLICATION

The present disclosure claims priority to Chinese Patent Application No. 202323577880.2, filed with the China National Intellectual Property Administration on December 25, 2023 and entitled "VALVE, SHOCK ABSORBER, CHASSIS, AND VEHICLE", which is incorporated herein by reference in its entirety.

### TECHNICAL FIELD

The present disclosure relates to the field of vehicle technologies, and in particular, to a valve, a shock absorber, a chassis, and a vehicle.

### BACKGROUND

A shock absorber is mounted in a wheel region of a vehicle, to reduce bumps experienced by the vehicle during traveling. When relative movement occurs between a vehicle body and wheels, a piston in the shock absorber moves up and down, causing oil in a shock absorber cavity to repeatedly flow from one cavity to another cavity through different orifices. As a result, vibration energy is converted into thermal energy of oil and gas and dissipated into the atmosphere, thereby allowing the shock absorber to operate efficiently within a low temperature range.

In a related technology, the shock absorber includes a plurality of valves, and a structure of the valve is complex, resulting in high difficulty in production and processing.

### SUMMARY

The present disclosure is intended to resolve at least one of the technical problems existing in the conventional technologies. Therefore, an object of the present disclosure is to provide a valve to block communication between an inlet and an outlet by a first valve core urged by an elastic member, thereby simplifying a structure of the valve, reducing a difficulty in producing the valve, and improving production efficiency.

A second object of the present disclosure is to provide a shock absorber by using the foregoing valve.

A third object of the present disclosure is to provide a chassis by using the foregoing shock absorber.

A fourth object of the present disclosure is to provide a vehicle by using the foregoing valve, the foregoing shock absorber, or the foregoing chassis.

A valve according to an embodiment of a first aspect of the present disclosure includes: a valve body, where an inlet and an outlet are formed on the valve body; a valve core mating member, where the valve core mating member is disposed in the valve body; a first valve core, where the first valve core is movably disposed in the valve core mating member; and an elastic member, where the elastic member is disposed between the first valve core and the valve core mating member, and the elastic member normally urges the first valve core toward the inlet to normally block communication between the inlet and the outlet.

According to the valve of the present disclosure, the elastic member can urge the first valve core to move downward to block the communication between the inlet and the outlet, so that an operation is convenient and simple. In addition, this helps the first valve core move stably in the valve core mating member, thereby improving use stability of the valve. Moreover, a structure of the elastic member is simple, thereby simplifying a structure of the valve, and reducing structural difficulty of the valve. This facilitates production, processing, and use of the valve, and further reduces production costs of the valve. When the valve is used in a vehicle, ride comfort of the vehicle can be improved.

According to some embodiments of the present disclosure, an accommodation groove is formed on a surface on a side that is of the first valve core and that is away from the inlet, and the elastic member abuts between a bottom wall of the accommodation groove and the valve core mating member.

According to some embodiments of the present disclosure, an outer circumferential surface of the first valve core slidably and sealingly fits with an inner circumferential surface of the valve core mating member in a moving direction of the first valve core, and the outer circumferential surface of the first valve core is located on an outer circumferential side of the accommodation groove.

According to some embodiments of the present disclosure, a guide hole is formed on the valve core mating member, and the guide hole is located on a side that is of the valve core mating member and that is away from the inlet. A guide portion extending in the moving direction of the first valve core is disposed in the accommodation groove, and an end that is of the guide portion and that is away from the inlet is slidably and sealingly fitted in the guide hole. The elastic member is sleeved on the outer circumferential side of the guide portion.

According to some embodiments of the present disclosure, an orifice is formed on the first valve core, and the inlet communicates with an interior of the valve core mating member through the orifice. A pressure relief hole is formed on the guide portion, and the interior of the valve core mating member communicates with the outlet through the pressure relief hole.

According to some embodiments of the present disclosure, a cross-sectional area of the orifice is less than a cross-sectional area of the pressure relief hole.

According to some embodiments of the present disclosure, the pressure relief hole includes at least one first pressure relief hole section and a second pressure relief hole section. The first pressure relief hole section extends in a radial direction of the guide portion. The first pressure relief hole section penetrates an outer circumferential surface of the guide portion and communicates with the interior of the valve core mating member. One end of the second pressure relief hole section penetrates an end face of an end that is of the guide portion and that is away from the inlet and communicates with the outlet, and the other end of the second pressure relief hole section communicates with the first pressure relief hole section.

According to some embodiments of the present disclosure, the valve further includes a second valve core. The second valve core is movably disposed on a side that is of the valve body and that is away from the inlet. An end of the second valve core detachably fits with the pressure relief hole to establish and block communication between the orifice and the outlet. The second valve core is adapted to urge the first valve core toward the inlet to block the communication between the inlet and the outlet.

According to some embodiments of the present disclosure, an inner wall surface of an end that is of the pressure relief hole and that is adjacent to the second valve core is inclined and extends in a direction away from the inlet and away from a central axis of the second valve core. An end face of an end that is of the second valve core and that is adjacent to the pressure relief hole is formed as a spherical surface.

According to some embodiments of the present disclosure, the second valve core is a valve stem.

According to some embodiments of the present disclosure, the valve further includes a drive assembly. The drive assembly is disposed on the valve body. When the drive assembly operates, the drive assembly drives the second valve core to detachably fit with the first valve core.

According to some embodiments of the present disclosure, the drive assembly includes: a fixed iron core, where the fixed iron core is disposed on the valve body; and a movable iron core, where the movable iron core is movably disposed on a side that is of the fixed iron core and that is away from the first valve core in the moving direction of the first valve core, and the second valve core is fastened to the movable iron core.

According to some embodiments of the present disclosure, the valve core mating member is fitted in the fixed iron core. At least one via is formed on the fixed iron core. The pressure relief hole communicates with the outlet through the via.

According to some embodiments of the present disclosure, at least one flow hole is formed on the fixed iron core. The drive assembly further includes an iron core cover. The iron core cover is disposed on the movable iron core. The iron core cover and the movable iron core jointly define a movable iron core cavity. The movable iron core is movably disposed in the movable iron core cavity. The pressure relief hole communicates with the movable iron core cavity through the flow hole.

According to some embodiments of the present disclosure, the first valve core has a first pressure-bearing surface and a second pressure-bearing surface. The second pressure-bearing surface is located on a side that is of the first pressure-bearing surface and that is away from the inlet. The first valve core is constructed such that when pressure on the first pressure-bearing surface is greater than pressure on the second pressure-bearing surface, the first valve core separates from a side surface on which the inlet of the valve body is located to communicate the inlet with the outlet.

According to some embodiments of the present disclosure, a flow area of the outlet is greater than a maximum flow area present when the first valve core is separated from the side surface on which the inlet of the valve body is located.

According to some embodiments of the present disclosure, at least one notch is formed on a side surface of an end that is of the valve core mating member and that faces the inlet. When the first valve core is separated from the side surface on which the inlet of the valve body is located, the inlet communicates with the outlet through the notch.

According to some embodiments of the present disclosure, a protrusion extending toward the first valve core is disposed at an outer circumferential edge of the inlet, and an end face of one end of the first valve core adjacent to the inlet detachably fits with the protrusion.

A shock absorber according to an embodiment of a second aspect of the present disclosure includes the valve according to the embodiment of the first aspect of the present disclosure.

A chassis according to an embodiment of a third aspect of the present disclosure includes the shock absorber according to the embodiment of the second aspect of the present disclosure.

A vehicle according to an embodiment of a fourth aspect of the present disclosure includes the valve according to the embodiment of the first aspect of the present disclosure, the shock absorber according to the embodiment of the second aspect of the present disclosure, or the chassis according to the embodiment of the third aspect of the present disclosure.

A part of additional aspects and advantages of the present disclosure are provided in the following descriptions, and become apparent from the following descriptions, or are learned from the practice of the present disclosure.

### BRIEF DESCRIPTION OF DRAWINGS

The above and/or additional aspects and advantages of the present disclosure become apparent and readily understood from the descriptions of embodiments with reference to the following accompanying drawings.
FIG. 1 is a diagram of a valve according to an embodiment of the present disclosure;
FIG. 2 is a sectional view of a valve in an unenergized state according to an embodiment of the present disclosure;
FIG. 3 is an enlarged view of part D circled in FIG. 2;
FIG. 4 is a diagram of a valve body of a valve according to an embodiment of the present disclosure;
FIG. 5 is a sectional view of a valve body of a valve according to an embodiment of the present disclosure;
FIG. 6 is a diagram of a first valve core of a valve according to an embodiment of the present disclosure;
FIG. 7 is a sectional view of a first valve core of a valve according to an embodiment of the present disclosure;
FIG. 8 is a diagram of a valve body mating member of a valve according to an embodiment of the present disclosure;
FIG. 9 is a sectional view of a valve body mating member of a valve according to an embodiment of the present disclosure;
FIG. 10 is a diagram of assembly of a second valve core and a movable iron core of a valve according to an embodiment of the present disclosure;
FIG. 11 is a sectional view of assembly of a second valve core and a movable iron core of a valve according to an embodiment of the present disclosure;
FIG. 12 is a diagram of a fixed iron core of a valve according to an embodiment of the present disclosure;
FIG. 13 is a sectional view of a fixed iron core of a valve according to an embodiment of the present disclosure;
FIG. 14 is a diagram of fluid flow in a valve in an energized state according to an embodiment of the present disclosure;
FIG. 15 is a diagram of a shock absorber according to an embodiment of the present disclosure;
FIG. 16 is a block diagram of a chassis according to an embodiment of the present disclosure;
FIG. 17 is a block diagram of a vehicle according to an embodiment of the present disclosure;
FIG. 18 is another block diagram of a vehicle according to an embodiment of the present disclosure; and
FIG. 19 is still another block diagram of a vehicle according to an embodiment of the present disclosure.

### Reference numerals:

100: valve;
1: valve body; 11: inlet; 12: outlet; 121: oil outlet hole; 13: protrusion;
2: valve core mating member; 21: guide hole; 22: notch;
3: first valve core; 31: accommodation groove; 32: guide portion;
321: pressure relief hole; 3211: first pressure relief hole section; 3212: second pressure relief hole section;
33: orifice; 34: first pressure-bearing surface; 35: second pressure-bearing surface; 36: groove;
4: elastic member; 5: second valve core; 51: valve stem;
6: drive assembly; 61: fixed iron core; 611: via; 612: flow hole;
613: through hole; 614: first shaft sleeve; 62: movable iron core;
63: iron core cover; 631: movable iron core cavity; 632: second shaft sleeve;
7: coil assembly; 8: coil housing; 9: magnetic isolation ring;
200: shock absorber;
201: compression valve; 202: rebound valve;
203: chassis; 204: vehicle;
400: inner side wall; 500: outer side wall;
700: inner side wall; 800: upper surface.

### DESCRIPTION OF EMBODIMENTS

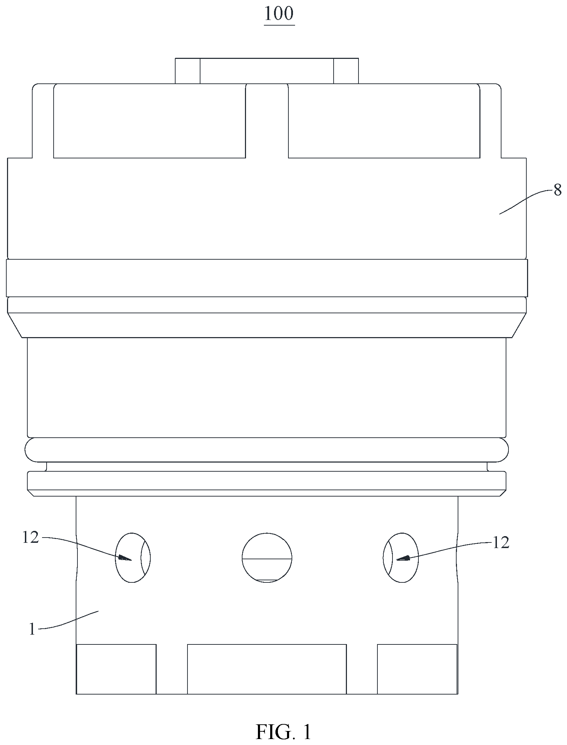

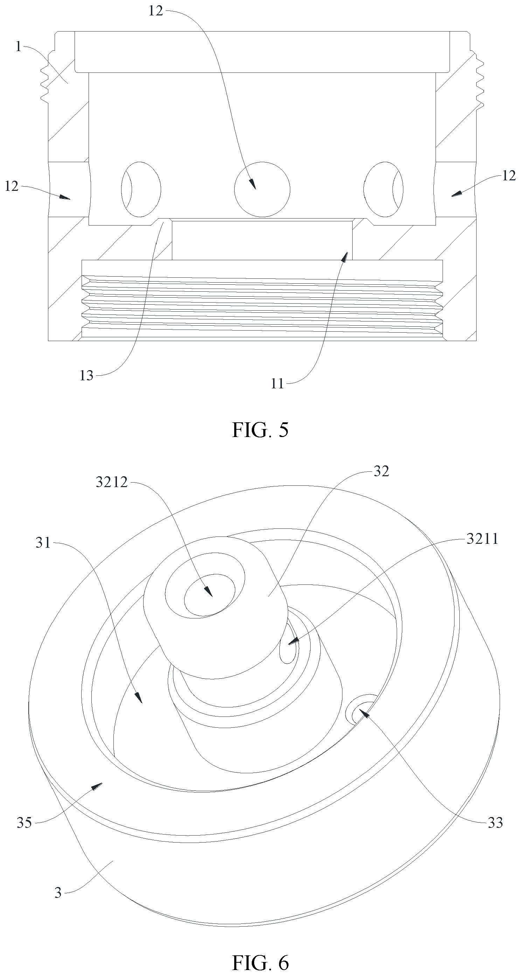

Embodiments of the present disclosure are described in detail below. Embodiments described with reference to the accompanying drawings are exemplary. The following describes a valve 100 according to an embodiment of a first aspect of the present disclosure with reference to FIG. 1 to FIG. 14. The valve 100 of this application used in a shock absorber 200 is used as an example for detailed descriptions.

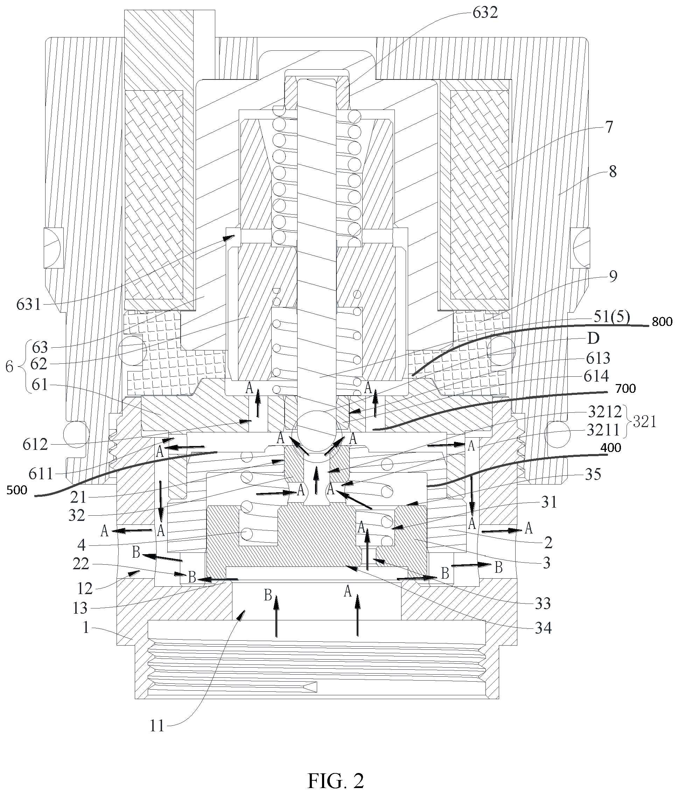

As shown in FIG. 1 and FIG. 2, the valve 100 according to an embodiment of the first aspect of the present disclosure includes a valve body 1, a valve core mating member 2, a first valve core 3, and an elastic member 4.

Specifically, an inlet 11 and an outlet 12 are formed on the valve body 1. The valve core mating member 2 is disposed in the valve body 1. The first valve core 3 is movably disposed in the valve core mating member 2. For example, in examples of FIG. 1 and FIG. 2, the inlet 11 is formed at a lower end of the valve body 1, and the outlet 12 is formed on a side wall of the valve body 1. The first valve core 3 is movable in the valve core mating member 2 in an up-down direction, and the first valve core 3 moves in the up-down direction to block and establish communication between the inlet 11 and the outlet 12. Through this arrangement, fluid (for example, oil) can flow into the valve body 1 through the inlet 11 of the valve body 1, and then flow out of the valve body 1 from an interior of the valve body 1. This helps the valve 100 adjust and control a damping force. In addition, when the first valve core 3 moves, the first valve core 3 moves in the valve core mating member 2, so that assembly stability of the first valve core 3 and the valve core mating member 2 is improved, and shaking of the first valve core 3 during movement is also avoided, thereby improving use reliability of the first valve core 3, and further improving use stability of the valve 100.

With reference to FIG. 2, the elastic member 4 is disposed between the first valve core 3 and the valve core mating member 2, and the elastic member 4 normally urges the first valve core 3 toward the inlet 11 to normally block communication between the inlet 11 and the outlet 12 (that is, the valve 100 may be a normally closed valve). For example, in an example of FIG. 2, an upper end of the elastic member 4 abuts against the valve core mating member 2, and a lower end of the elastic member 4 abuts against the first valve core 3. In this way, the valve 100 is simple to use and operate, making it convenient for the elastic member 4 to urge the first valve core 3 to smoothly reset and block the communication between the inlet 11 and the outlet 12. This helps increase an operation speed of the valve 100 and shorten a response time of the valve 100. In addition, a structure of the elastic member 4 is simple, thereby simplifying a structure of the valve 100, and reducing production costs and use costs of the valve 100. For example, the elastic member 4 may be a spring.

According to the valve 100 of the present disclosure, the elastic member 4 can urge the first valve core 3 to move downward to block the communication between the inlet 11 and the outlet 12, so that an operation is convenient and simple. In addition, this helps the first valve core 3 move stably in the valve core mating member 2, thereby improving the use stability of the valve 100. Moreover, the structure of the elastic member 4 is simple, thereby simplifying the structure of the valve 100, and reducing structural difficulty of the valve 100. This facilitates production, processing, and use of the valve 100, and further reduces the production costs of the valve 100. When the valve 100 is used in a vehicle 204, ride comfort of the vehicle 204 can be improved.

According to some embodiments of the present disclosure, refer to FIG. 2, FIG. 6, and FIG. 7. An accommodation groove 31 is formed on a surface on a side that is of the first valve core 3 and that is away from the inlet 11, and the elastic member 4 abuts between a bottom wall of the accommodation groove 31 and the valve core mating member 2. For example, in examples of FIG. 2, FIG. 6, and FIG. 7, the accommodation groove 31 is formed on an upper portion of the first valve core 3, the lower end of the elastic member 4 abuts against the bottom wall of the accommodation groove 31, and an outer circumferential surface of a lower portion of the elastic member 4 abuts against a side wall of the accommodation groove 31. Through this arrangement, the side wall of the accommodation groove 31 can limit the lower portion of the elastic member 4, so that the elastic member 4 is not prone to deflection in a process in which the elastic member 4 is compressed or recovers from deformation, thereby improving use stability of the elastic member 4. In addition, the accommodation groove 31 has a positioning function for the elastic member 4, to facilitate rapid assembly of the elastic member 4 and the first valve core 3, thereby improving fitting stability of the elastic member 4 and the first valve core 3 and the valve core mating member 2.

According to some embodiments of the present disclosure, refer to FIG. 2. An outer circumferential surface of the first valve core 3 slidably and sealingly fits with an inner circumferential surface of the valve core mating member 2 in a moving direction of the first valve core 3, and the outer circumferential surface of the first valve core 3 is located on an outer circumferential side of the accommodation groove 31.

For example, in the example of FIG. 2, a cross section of the valve core mating member 2 in the up-down direction is approximately in an inverted "U" shape, and the outer circumferential surface of the first valve core 3 is in clearance fit with the inner circumferential surface of the valve core mating member 2. Due to small clearance and a smooth surface, this can be regarded as providing a sliding seal function for fluid such as oil. The accommodation groove 31 is formed on an inner circumferential side of the outer circumferential surface of the first valve core 3, and a horizontal cross-sectional shape of the accommodation groove 31 is circular. Through this arrangement, sliding sealing performance between the first valve core 3 and the valve core mating member 2 is improved, so that fluid is effectively prevented from flowing between the outer circumferential surface of the first valve core 3 and an inner side wall 400 of the valve core mating member 2. This further helps the fluid flow to a position between the first valve core 3 and the valve core mating member 2, and facilitates normal use of the valve 100. In addition, the inner circumferential surface of the valve core mating member 2 guides movement of the first valve core 3, thereby improving reliability of the movement of the first valve core 3, and further improving use reliability of the valve 100.

According to some embodiments of the present disclosure, refer to FIG. 2. A guide hole 21 is formed on the valve core mating member 2, and the guide hole 21 is located on a side that is of the valve core mating member 2 and that is away from the inlet 11. A guide portion 32 extending in the moving direction of the first valve core 3 is disposed in the accommodation groove 31. An end that is of the guide portion 32 and that is away from the inlet 11 is slidably and sealingly fitted in the guide hole 21. The elastic member 4 is sleeved on an outer circumferential side of the guide portion 32.

For example, in the example of FIG. 2, the guide hole 21 is located on an upper side of the valve core mating member 2, and the guide hole 21 penetrates the inner side wall 400 of the valve core mating member 2 and an outer side wall 500 of the valve core mating member 2 in the up-down direction. The guide portion 32 extends in the up-down direction. A lower end face of the guide portion 32 is connected to the bottom wall of the accommodation groove 31. An upper end of the guide portion 32 passes through the guide hole 21. An outer circumferential surface of the upper end of the guide portion 32 is in clearance fit with a side wall of the guide hole 21. Due to the small clearance and the smooth surface, this can be regarded as providing the sliding seal function for fluid such as oil. Through this arrangement, an inner wall of the guide hole 21 guides the guide portion 32, so that the first valve core 3 is further prevented from deflecting during upward and downward movement of the first valve core 3, thereby further improving stability and reliability of the movement of the first valve core 3. In addition, coaxiality of mounting of the first valve core 3 and the valve core mating member 2 can also be effectively ensured, thereby improving smoothness of the upward and downward movement of the first valve core 3, and facilitating the upward and downward movement of the first valve core 3. Moreover, sealing performance of assembly between the guide portion 32 and the guide hole 21 is improved, and fluid is prevented from flowing between an outer circumferential surface of the guide portion 32 and the guide hole 21, thereby facilitating the normal use of the valve 100. Further, the guide portion 32 can limit the elastic member 4, so that shaking of the elastic member 4 is avoided during the upward and downward movement of the first valve core 3, thereby improving the use stability of the elastic member 4, and improving stability of the first valve core 3 during movement. Furthermore, the guide portion 32 can guide and position, thereby facilitating guide assembly of the elastic member 4 and the guide portion 32, and facilitating assembly of the elastic member 4 and the first valve core 3, so that assembly efficiency of the valve 100 is improved, and use reliability of the elastic member 4 is improved.

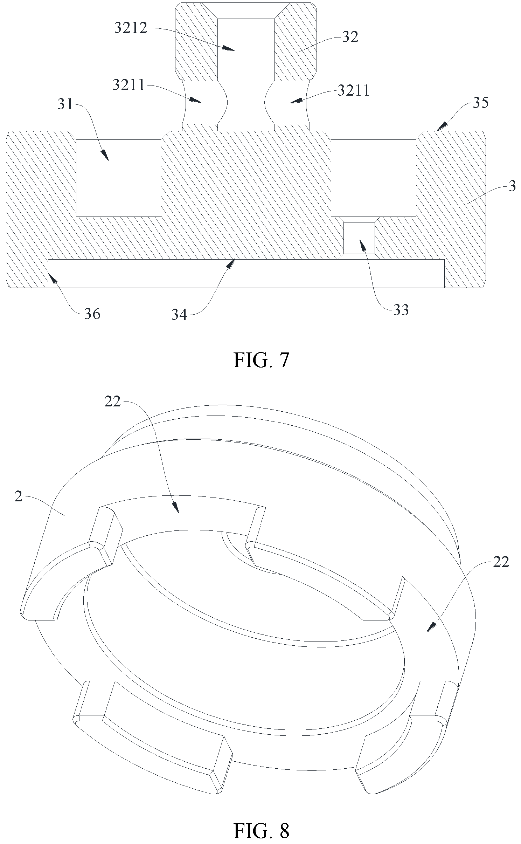

According to some embodiments of the present disclosure, refer to FIG. 2 and FIG. 7. An orifice 33 is formed on the first valve core 3, and the inlet 11 communicates with an interior of the valve core mating member 2 through the orifice 33. A pressure relief hole 321 is formed on the guide portion 32, and the interior of the valve core mating member 2 communicates with the outlet 12 through the pressure relief hole 321.

For example, in examples of FIG. 2 and FIG. 7, the orifice 33 penetrates a lower end face of the first valve core 3 and the bottom wall of the accommodation groove 31 in the up-down direction, and the inlet 11 communicates with the pressure relief hole 321 through the orifice 33. After fluid flows in through the inlet 11, the fluid may flow through the orifice 33 to the first valve core 3 and the valve core mating member 2, flow through the pressure relief hole 321 to the outlet 12, and then flow out of the valve 100. In this case, a flow path of the fluid is a first path (as shown by an arrow A in FIG. 2). Through this arrangement, the first valve core 3 has a simple structure and a clever design, facilitating production and processing, thereby reducing production costs. In addition, this helps fluid flow smoothly between the inlet 11 and the outlet 12, and adjust the damping force of the valve 100.

Further, refer to FIG. 2. A cross-sectional area of the orifice 33 is less than a cross-sectional area of the pressure relief hole 321. Through this arrangement, in a unit time, a flow rate of fluid flowing into the first valve core 3 and the valve core mating member 2 is lower than a flow rate of fluid flowing out from the first valve core 3 and the valve core mating member 2, so that pressure on the pressure relief hole 321 can be reduced. Therefore, pressure on a lower side surface of the first valve core 3 is greater than pressure on an upper side surface of the first valve core 3, and a pressure difference between the pressure on the lower side surface of the first valve core 3 and the pressure on the upper side surface of the first valve core 3 can urge the first valve core 3 to move upward, to communicate the inlet 11 with the outlet 12, so that fluid can also flow from the inlet 11, along the lower side surface of the first valve core 3 and an inner wall of the valve body 1, to the outlet 12, and then flow out through the outlet 12. In this case, a flow path of the fluid is a second path (as shown by an arrow B in FIG. 2). In this way, fluid can simultaneously flow along the first path and the second path, increasing a flow rate of the fluid flowing through the valve 100, thereby further facilitating adjustment of the damping force. In addition, the orifice 33 can limit an amount of fluid flowing into the first valve core 3 to prevent the fluid from accumulating inside the first valve core 3, thereby further facilitating the normal use of the valve 100.

According to some embodiments of the present disclosure, refer to FIG. 2 and FIG. 7. The pressure relief hole 321 includes at least one first pressure relief hole section 3211 and a second pressure relief hole section 3212. The first pressure relief hole section 3211 extends in a radial direction of the guide portion 32, and the first pressure relief hole section 3211 penetrates the outer circumferential surface of the guide portion 32 and communicates with the interior of the valve core mating member 2. One end of the second pressure relief hole section 3212 penetrates an end face of an end that is of the guide portion 32 and that is away from the inlet 11 and communicates with the outlet 12, and the other end of the second pressure relief hole section 3212 communicates with the first pressure relief hole section 3211.

For example, in the examples of FIG. 2 and FIG. 7, the first pressure relief hole section 3211 extends in a horizontal direction, the second pressure relief hole section 3212 extends in the up-down direction, and an upper end of the second pressure relief hole section 3212 penetrates an upper side surface of the guide portion 32 and communicates with the outlet 12. An end that is of the first pressure relief hole section 3211 and that is close to the inner side wall 400 of the valve core mating member 2 penetrates the outer circumferential surface of the guide portion 32. A lower end of the second pressure relief hole section 3212 communicates with the first pressure relief hole section 3211. After flowing in through the inlet 11, fluid flows through the orifice 33 to the first valve core 3 and the valve core mating member 2, and then sequentially flows along the first pressure relief hole section 3211 and the second pressure relief hole section 3212 to the outlet 12, and then flows out of the valve 100. Through this arrangement, the first pressure relief hole section 3211 and the second pressure relief hole section 3212 have simple structures, thereby reducing a difficulty in producing the pressure relief hole 321, increasing a production rate of the pressure relief hole 321, and further reducing production costs of the pressure relief hole 321. In addition, fluid flowing through the pressure relief hole 321 can be further effectively ensured, thereby facilitating the normal use of the valve 100.

According to some embodiments of the present disclosure, refer to FIG. 2. The valve 100 further includes a second valve core 5. The second valve core 5 is movably disposed on a side that is of the valve body 1 and that is away from the inlet 11. An end of the second valve core 5 detachably fits with the pressure relief hole 321 to establish and block communication between the orifice 33 and the outlet 12. The second valve core 5 is adapted to urge the first valve core 3 toward the inlet 11 to block the communication between the inlet 11 and the outlet 12.

For example, in the example of FIG. 2, the second valve core 5 is located on an upper portion of the valve body 1, and the orifice 33 communicates with the outlet 12 when a lower end of the second valve core 5 is separated from the pressure relief hole 321. When the second valve core 5 moves downward, the lower end of the second valve core 5 fits with the pressure relief hole 321 to block the communication between the orifice 33 and the outlet 12. After the lower end of the second valve core 5 fits with the pressure relief hole 321, during downward movement, the second valve core 5 urges the first valve core 3 to move downward, so that the lower end face of the first valve core 3 is in contact with an inner side wall of the valve body 1 to block the communication between the inlet 11 and the outlet 12. Through this arrangement, the lower end of the second valve core 5 detachably fits with the pressure relief hole 321. This helps fluid flow in the valve body 1, thereby facilitating the normal use of the valve 100. In addition, a flow rate at the pressure relief hole 321 can be adjusted by fitting between the lower end of the second valve core 5 and the pressure relief hole 321, thereby adjusting a flow rate at the outlet 12. Moreover, the second valve core 5 is simple to operate, easily blocking the communication between the inlet 11 and the outlet 12, thereby facilitating use of the valve 100.

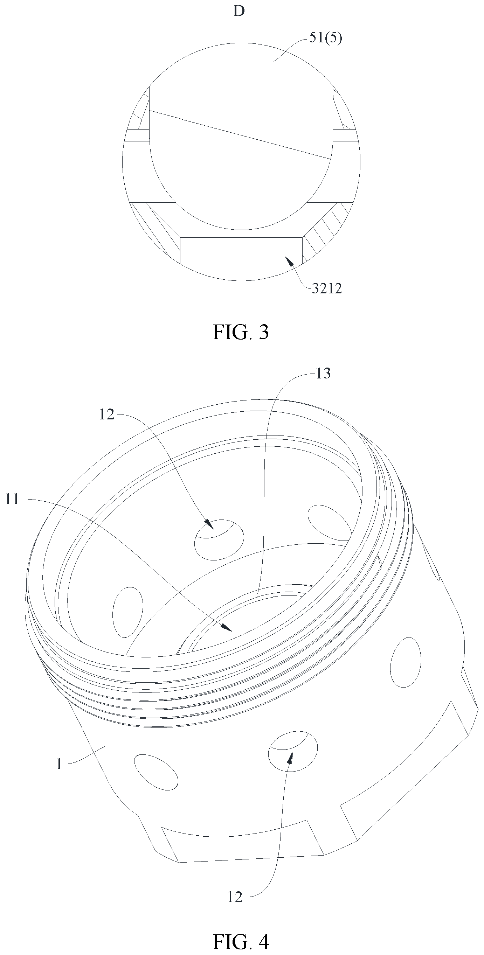

According to some embodiments of the present disclosure, refer to FIG. 2 and FIG. 3. An inner wall surface of an end that is of the pressure relief hole 321 and that is adjacent to the second valve core 5 is inclined and extends in a direction away from the inlet 11 and away from a central axis of the second valve core 5. An end face of an end that is of the second valve core 5 and that is adjacent to the pressure relief hole 321 is formed as a spherical surface.

For example, in examples of FIG. 2 and FIG. 3, a side wall of the upper end of the second pressure relief hole section 3212 is inclined and extends. In this way, the fitting between the lower end of the second valve core 5 and the pressure relief hole 321 can be a spherical-to-planar fit (that is, the lower end of the second valve core 5 is sealingly actuated to the second pressure relief hole section 3212). In other words, an inner wall surface of the second pressure relief hole section 3212 may be disposed as a plane to fit with an end face of the lower end of the second valve core 5, so that the fitting between the second valve core 5 and the pressure relief hole 321 is more secure. When the end face of the lower end of the second valve core 5 is fitted in the second pressure relief hole section 3212, the second valve core 5 is not prone to separating from the second pressure relief hole section 3212 due to vibration of the valve 100, thereby improving fitting reliability of the second valve core 5 and the pressure relief hole 321, improving reliability of the valve 100, and improving use performance of the valve 100. This facilitates long-term stable use of the valve 100. However, this is not limited thereto. For example, an inner wall surface of the upper end of the second pressure relief hole section 3212 may be formed as an arc surface, and fitting between the lower end of the second valve core 5 and the second pressure relief hole section 3212 may be a spherical-to-curved surface fit. In other words, the inner wall surface of the second pressure relief hole section 3212 may be disposed as an arc surface to fit with the end face of the lower end of the second valve core 5.

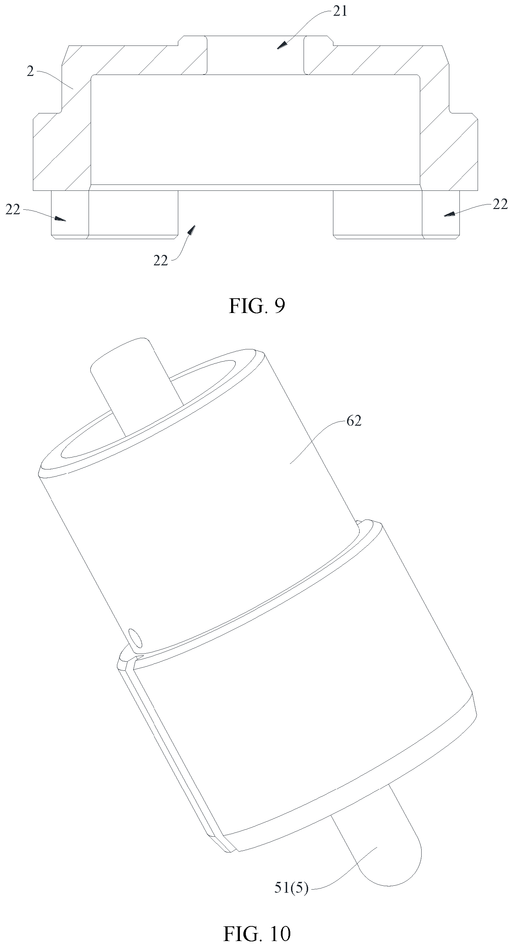

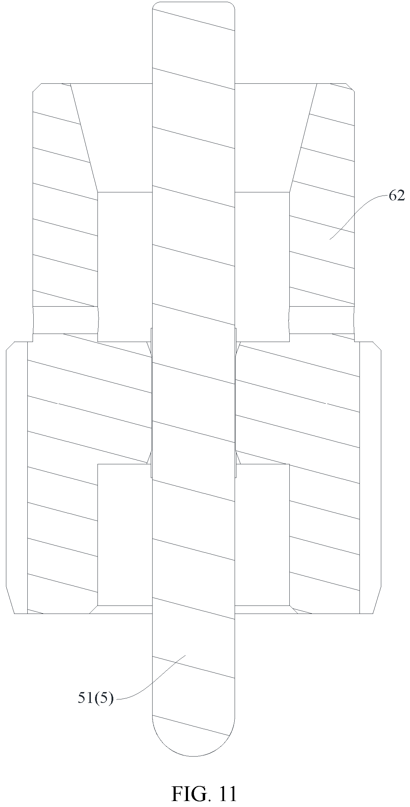

According to some embodiments of the present disclosure, refer to FIG. 10 and FIG. 11. The second valve core 5 is a valve stem 51. For example, in examples of FIG. 10 and FIG. 11, the valve stem 51 extends in the up-down direction, and the valve stem 51 is approximately in a cylindrical shape. In this way, the second valve core 5 has a simple structure and is easy to produce, thereby increasing a production rate of the second valve core 5 and reducing production costs of the second valve core 5.

According to some embodiments of the present disclosure, refer to FIG. 2. The valve 100 further includes a drive assembly 6. The drive assembly 6 is disposed on the valve body 1. When the drive assembly 6 operates, the drive assembly 6 drives the second valve core 5 to detachably fit with the first valve core 3. For example, in the example shown in FIG. 2, the drive assembly 6 is located above the valve body 1 and is connected to the valve body 1, and the drive assembly 6 may act on the second valve core 5 to drive the second valve core 5 to move up and down. When the drive assembly 6 drives the second valve core 5 to move downward, the lower end of the second valve core 5 fits with an inner wall of the upper end of the second pressure relief hole section 3212, and the second valve core 5 blocks communication between the pressure relief hole 321 and the outlet 12. When the drive assembly 6 drives the second valve core 5 to move upward, the lower end of the second valve core 5 separates from the inner wall of the upper end of the second pressure relief hole section 3212, and the pressure relief hole 321 and the outlet 12 are in a communicated state. In this way, the drive assembly 6 acts on the second valve core 5 to drive the second valve core 5 to move, thereby adjusting a change in a communication opening degree of the second valve core 5 to adjust a magnitude of a flow rate at the outlet 12. In addition, an action of drive assembly 6 improves movement reliability of the second valve core 5, thereby improving the use reliability of the valve 100.

According to some embodiments of the present disclosure, refer to FIG. 2. The drive assembly 6 includes a fixed iron core 61 and a movable iron core 62. The fixed iron core 61 is disposed on the valve body 1. The movable iron core 62 is movably disposed on a side that is of the fixed iron core 61 and that is away from the first valve core 3 in the moving direction of the first valve core 3. The second valve core 5 is fastened to the movable iron core 62.

For example, in the example shown in FIG. 2, the movable iron core 62 is disposed above the fixed iron core 61, the movable iron core 62 is movable in the up-down direction, and an outer circumferential surface of the second valve core 5 is fastened to the movable iron core 62. After the valve 100 is energized, the movable iron core 62 may drive the second valve core 5 to move downward to adjust a size of a gap between a lower end face of the second valve core 5 and the inner wall of the upper end of the second pressure relief hole section 3212, that is, adjust the communication opening degree of the second valve core 5, thereby adjusting the flow rate at the pressure relief hole 321 and further adjusting the magnitude of the flow rate at the outlet 12. Through this arrangement, movement of the second valve core 5 is adjusted via the movable iron core 62, thereby reducing a difficulty in adjusting the magnitude of the flow rate at the outlet 12, improving control accuracy, and further improving the use reliability of the valve 100. In addition, the fixed iron core 61 can limit the movable iron core 62, to limit a moving distance of the movable iron core 62 and facilitate use of the drive assembly 6.

According to some embodiments of the present disclosure, refer to FIG. 2, FIG. 12, and FIG. 13. The valve core mating member 2 is fitted in the fixed iron core 61. At least one via 611 is formed on the fixed iron core 61. The pressure relief hole 321 communicates with the outlet 12 through the via 611. For example, in examples of FIG. 2, FIG. 12, and FIG. 13, an upper end of the valve core mating member 2 is inserted into a lower inner side of the fixed iron core 61, and the outer side wall 500 of the valve core mating member 2 is snap-fitted to a lower end of the fixed iron core 61. Four vias 611 are provided, and the four vias 611 are spaced apart in a circumferential direction of the fixed iron core 61, and the via 611 penetrates an inner side wall 700 of the fixed iron core 61 and an outer side wall of the fixed iron core 61. After flowing out through the upper end of the second pressure relief hole section 3212, fluid flows through the via 611 to the outlet 12, and flows out of the valve 100 through the outlet 12. Through this arrangement, the via 611 is provided, so that the pressure relief hole 321 can communicate with the outlet 12, thereby improving smoothness of fluid flow and facilitating the normal use of the valve 100. In addition, the via 611 has a simple structure, so that a difficulty in producing the fixed iron core 61 is reduced, thereby helping increase a production rate of the fixed iron core 61.

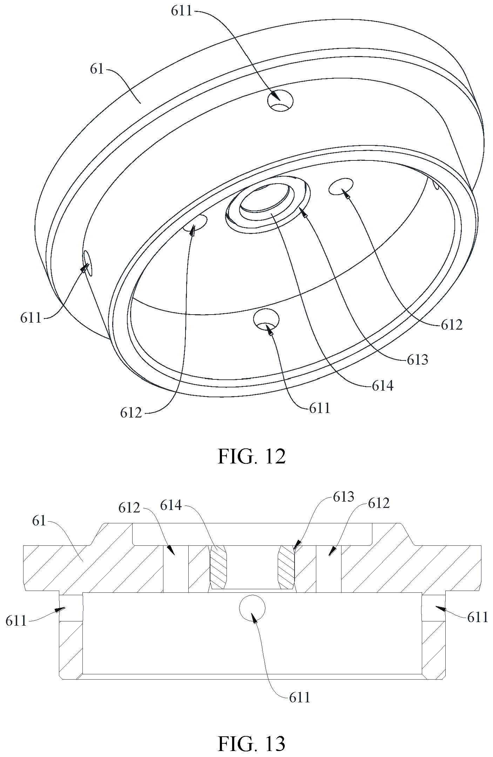

According to some embodiments of the present disclosure, refer to FIG. 2 and FIG. 12. At least one flow hole 612 is formed on the fixed iron core 61. The drive assembly 6 further includes an iron core cover 63. The iron core cover 63 is disposed on the movable iron core 62. The iron core cover 63 and the movable iron core 62 jointly define a movable iron core cavity 631. The movable iron core 62 is movably disposed in the movable iron core cavity 631. The pressure relief hole 321 communicates with the movable iron core cavity 631 through the flow hole 612.

For example, in examples of FIG. 2 and FIG. 12, two flow holes 612 are provided, and the flow hole 612 penetrates the inner side wall 700 of the fixed iron core 61 and an upper surface 800 of the fixed iron core 61 in the up-down direction. The movable iron core 62 is disposed in the iron core cover 63, and the movable iron core 62 is movable in the up-down direction within the iron core cover 63. Fluid that flows through the pressure relief hole 321 to the fixed iron core 61 may flow through the flow hole 612 to the movable iron core cavity 631. Through this arrangement, the iron core cover 63 can protect the movable iron core 62, thereby preventing the movable iron core 62 from being damaged, and prolonging a service life of the movable iron core 62. In addition, the flow hole 612 can ensure flow balance of fluid between the movable iron core cavity 631 and the fixed iron core 61 and the valve core mating member 2, thereby preventing pressure imbalance between the movable iron core cavity 631 and the second valve core 5 from adversely affecting movement of the movable iron core 62 and the second valve core 5, so that the valve 100 can be normally used (for example, the valve 100 can be normally actuated).

According to some embodiments of the present disclosure, refer to FIG. 2 and FIG. 7. The first valve core 3 has a first pressure-bearing surface 34 and a second pressure-bearing surface 35. The second pressure-bearing surface 35 is located on a side that is of the first pressure-bearing surface 34 and that is away from the inlet 11. The first valve core 3 is constructed such that when pressure on the first pressure-bearing surface 34 is greater than pressure on the second pressure-bearing surface 35, the first valve core 3 separates from a side surface on which the inlet 11 of the valve body 1 is located to communicate the inlet 11 and the outlet 12.

For example, in the examples of FIG. 2 and FIG. 7, the first pressure-bearing surface 34 is located on a lower side of the first valve core 3, and the second pressure-bearing surface 35 is located on an upper side of the first valve core 3. When a pressure difference between the pressure on the first pressure-bearing surface 34 and the pressure on the second pressure-bearing surface 35 changes, a communication opening degree of the first valve core 3 between the inlet 11 and the outlet 12 changes to adjust the flow rate at the outlet 12. When the pressure difference between the pressure on the first pressure-bearing surface 34 and the pressure on the second pressure-bearing surface 35 is larger, the communication opening degree of the first valve core 3 is larger. In this case, a flow rate of fluid flowing between the first pressure-bearing surface 34 and the valve body 1 is higher. In other words, the flow rate at the outlet 12 is higher. When the pressure difference between the pressure on the first pressure-bearing surface 34 and the pressure on the second pressure-bearing surface 35 is smaller, the communication opening degree of the first valve core 3 is smaller. In this case, a flow rate of fluid flowing between the second pressure-bearing surface 35 and the valve body 1 is lower. In other words, the flow rate at the outlet 12 is lower. In this way, an opening degree of the first valve core 3 is adjusted by adjusting the pressure difference between the pressure on the first pressure-bearing surface 34 and the pressure on the second pressure-bearing surface 35, thereby adjusting an amount of fluid flowing out of the outlet 12 per unit time, making it easier to control an amount of fluid flowing out of the valve 100, and providing a larger adjustment range. This helps adjust the damping force. In addition, the first valve core 3 is opened by pressure. This helps shorten the response time of the valve 100. When the valve 100 is used in the vehicle 204, the ride comfort of the vehicle 204 can be improved.

According to some embodiments of the present disclosure, refer to FIG. 2. A flow area of the outlet 12 is greater than a maximum flow area present when the first valve core 3 is separated from the side surface on which the inlet 11 of the valve body 1 is located. For example, when there are a plurality of outlets 12, the flow area of the outlet 12 is a sum of cross-sectional areas of the plurality of outlets 12. A groove 36 is formed at a lower end of the first valve core 3. The maximum flow area is a product of an inner wall circumference of the groove 36 and a distance between the lower end face of the first valve core 3 and the inner side wall of the valve body 1. Through this arrangement, throttling is avoided during fluid flow. This helps the fluid flow rapidly out of the outlet 12, thereby facilitating the normal use of the valve 100. In addition, the outlet 12 has a simple structure, thereby making it easier to control the flow area of the outlet 12, and facilitating production of the valve 100.

According to some embodiments of the present disclosure, refer to FIG. 2, FIG. 8, and FIG. 9. At least one notch 22 is formed on a side surface of an end that is of the valve core mating member 2 and that faces the inlet 11. When the first valve core 3 is separated from the side surface on which the inlet 11 of the valve body 1 is located, the inlet 11 communicates with the outlet 12 through the notch 22.

For example, in examples of FIG. 2, FIG. 8 and FIG. 9, the notch 22 is formed at a lower end of the valve core mating member 2, four notches 22 are provided, and the four notches 22 are spaced apart in a circumferential direction of the valve core mating member 2. When the first valve core 3 is separated from the side surface on which the inlet 11 of the valve body 1 is located, fluid flows through the inlet 11, passes through a gap between the lower end face of the first valve core 3 and the inner wall of the valve body 1, enters the valve body 1 along the notch 22, and flows out through the outlet 12. Through this arrangement, after the first valve core 3 is opened, the inlet 11 can communicate with the outlet 12 through the notch 22, thereby making it easier for fluid to smoothly flow. This helps fluid flow to the outlet 12 and the normal use of the valve 100. In addition, the notch 22 has a simple structure, thereby reducing a difficulty in producing the valve core mating member 2 and helping increase a production rate of the valve core mating member 2. Moreover, the valve 100 is cleverly designed with a flow passage structure, so that the structure of the valve 100 is simple, and pressure on the valve 100 and a flow rate through the valve 100 are stable and controllable. Further, the second valve core 5 is opened by a small flow entering the first valve core 3 and the valve core mating member 2, and the first valve core 3 is opened by the pressure difference between the pressure on the first pressure-bearing surface 34 and the pressure on the second pressure-bearing surface 35. Magnitudes of electromagnetic forces generated by applying different currents adjust the movable iron core 61 to adjust a flow rate, thereby implementing an effect of proportional adjustment of a damping force on a shock absorber 200, so that the valve 100 is a valve 100 having a double adjusting damping force. This helps adjust the communication opening degree of the first valve core 3.

According to some embodiments of the present disclosure, refer to FIG. 2, FIG. 4, and FIG. 5. A protrusion 13 extending toward the first valve core 3 is provided at an outer circumferential edge of the inlet 11. An end face of an end that is of the first valve core 3 and that is adjacent to the inlet 11 detachably fit with the protrusion 13. For example, in examples of FIG. 2, FIG. 4, and FIG. 5, the protrusion 13 is located at an outer circumferential edge of an upper end of the inlet 11, the protrusion 13 extends upward, and an end face of the lower end of the first valve core 3 detachably fit with an upper end face of the protrusion 13. Through this arrangement, the protrusion 13 is provided, so that a contact area between the first valve core 3 and the inner side wall of the valve body 1 is reduced, and friction between the first valve core 3 and the valve body 1 is further reduced. This helps the first valve core 3 separate from the valve body 1, thereby improving smoothness of the movement of the first valve core 3, and shortening the response time of the valve 100. In addition, the upper end face of the protrusion 13 may be a sealing surface and is configured to be sealingly actuated to the lower end of the first valve core 3, to adjust a magnitude of the flow rate, thereby improving sealing performance between the lower end face of the first valve core 3 and the protrusion 13.

Optionally, refer to FIG. 2. A through hole 613 is formed on the fixed iron core 61. The through hole 613 penetrates an inner side surface of the fixed iron core 61 and an upper side surface of the fixed iron core 61 in the up-down direction, and the through hole 613 is located between the two flow holes 612. A first shaft sleeve 614 is disposed at the through hole 613. The first shaft sleeve 614 is fastened on the fixed iron core 61 by riveting. An outer circumferential surface of the first shaft sleeve 614 is connected to an inner wall of the through hole 613. The lower end of the second valve core 5 passes through the first shaft sleeve 614. A second shaft sleeve 632 is disposed at an upper end of an inner side wall of the iron core cover 63, and an upper end of the second valve core 5 passes through the second shaft sleeve 632. Through this arrangement, the first shaft sleeve 614 and the second shaft sleeve 632 guide the second valve core 5, so that the second valve core 5 can be guided to move up and down. This helps improve stability and reliability of the movement of the second valve core 5. In addition, the first shaft sleeve 614 can protect the fixed iron core 61 and prevent the fixed iron core 61 from being damaged during the movement of the second valve core 5, thereby prolonging a service life of the fixed iron core 61. Moreover, the first shaft sleeve 614 and the second shaft sleeve 632 have a simple structure and are easy to replace, thereby facilitating maintenance of the valve 100.

According to some optional embodiments of the present disclosure, refer to FIG. 1 and FIG. 2. The valve 100 further includes a coil assembly 7, a coil housing 8, and a magnetic isolation ring 9. The magnetic isolation ring 9 is press-fitted at the bottom of the iron core cover 63. The coil assembly 7 is sleeved on the iron core cover 63. The coil housing 8 is sleeved on the coil assembly 7 and an upper end of the valve body 1. A lower end of the coil housing 8 is threadedly connected to an outer side of the upper portion of the valve body 1. This facilitates assembly and disassembly of the coil housing 8 and the valve body 1, thereby improving assembly efficiency and disassembly efficiency of the valve 100. In addition, after the coil assembly 7 is energized, the movable iron core 62 can move downward with the second valve core 5, and the magnitude of the electromagnetic force can be controlled by a magnitude of a current applied to the coil assembly 7 to adjust an opening and closing force of the second valve core 5, thereby controlling the magnitude of the flow rate at the outlet 12. Moreover, the magnetic isolation ring 9 can prevent the iron core cover 63 from moving together with downward movement of the movable iron core 62, thereby facilitating the normal use of the valve 100.

Optionally, the movable iron core 62 is a magnetic conductor, and the second valve core 5 is a non-magnetic conductor. In this way, after the valve 100 is energized, the magnitude of the electromagnetic force is conveniently adjusted based on the magnitude of the current, to adjust the movement of the first valve core 3 driven by the movable iron core 62, thereby facilitating the normal use of the valve 100.

A specific use process of the valve 100 in this application is as follows.

When the valve 100 is not energized, and the shock absorber 200 is compressed, a flow rate of fluid, for example, oil, through the valve 100 is higher, and a damping force generated by the shock absorber 200 is small (as shown in FIG. 1). When the valve 100 is not energized, the lower end of the second valve core 5 and the second pressure relief hole section 3212 are in a separated state. Fluid flows from the inlet 11 through the orifice 33 to the first valve core 3 and the valve core mating member 2. Then, the fluid flows sequentially through the first pressure relief hole section 3211 and the second pressure relief hole section 3212 to the valve core mating member 2 and the fixed iron core 61, a small amount of fluid enters the movable iron core cavity 631 through the flow hole 612, a large amount of fluid flows through the via 611 to the fixed iron core 61 and the valve body 1, and then flows out of the valve 100 through the outlet 12. In other words, the flow path is the first path (as shown by the arrow A in FIG. 1). When a flow rate is higher, a cross section of the orifice 33 is smaller, obstructing fluid, and a cross section of the pressure relief hole 321 is larger, allowing fluid between the first valve core 3 and the valve core mating member 2 to flow out rapidly. When the pressure difference is formed between the first pressure-bearing surface 34 of the first valve core 3 and the second pressure-bearing surface 35 of the first valve core 3, fluid urges the first valve core 3 upward, and the first valve core 3 is opened. In this case, fluid can rapidly flow from the lower end of the first valve core 3 and the inner wall of the valve body 1 through the notch 22 to the outlet 12, and then the fluid flows out of the valve body 1 through the outlet 12. In other words, the flow path is the second path (as shown by the arrow B FIG. 1).

When the valve 100 is energized, the movable iron core 62 drives the second valve core 5 to move downward, and the lower end of the second valve core 5 is sealingly attached to the upper end of the second pressure relief hole section 3212. When the shock absorber 200 operates, magnitudes of opening and closing forces of the second valve core 5 and the second pressure relief hole section 3212 may be controlled by a magnitude of a current supplied to the coil assembly 7, thereby controlling the magnitude of the flow rate and adjusting the damping force of the shock absorber 200. When a full current is applied to the coil assembly 7, a sealing force between the lower end face of the first valve core 3 and the upper end face of the protrusion 13 is maximum, and a flow rate of fluid through the valve 100 is lower. In this case, the damping force generated by the shock absorber 200 is maximum.

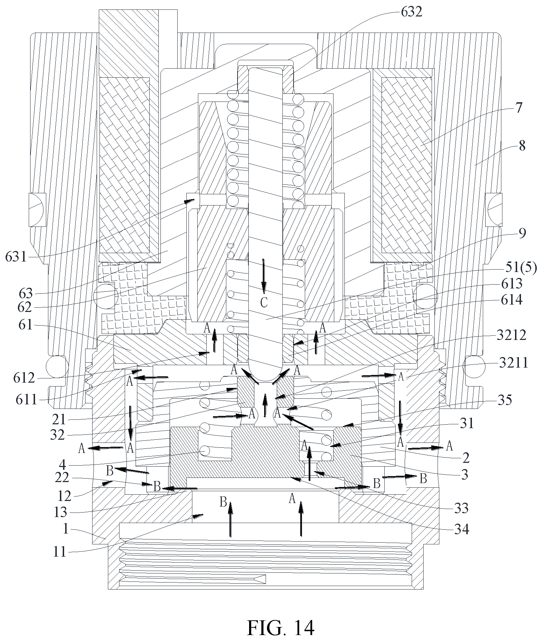

When the valve 100 is energized, the coil assembly 7 generates an electromagnetic force to drive the movable iron core 62 to drive the second valve core 5 to move downward (an acting force is shown by an arrow C in FIG. 14). The lower end of the second valve core 5 fits with the upper end of the second pressure relief hole section 3212 to seal the pressure relief hole 321. When fluid flows from the inlet 11 through the orifice 33 to the first valve core 3 and the valve core mating member 2, and then the fluid flows from the first pressure relief hole section 3211 to the upper end of the second pressure relief hole section 3212. When pressure of the fluid is greater than the electromagnetic force, the pressure of the fluid urges the second valve core 5 to move upward, and the lower end of the second valve core 5 separates from the second pressure relief hole section 3212. In this case, the fluid flows from the second pressure relief hole section 3212 to the valve core mating member 2 and the fixed iron core 61, a small amount of fluid enters the movable iron core cavity 631 through the flow hole 612, a large amount of fluid flows through the via 611 to the fixed iron core 61 and the valve body 1, and then flows out of the valve 100 through the outlet 12. In other words, the flow path is the first path (as shown by an arrow A in FIG. 14). When the lower end of the second valve core 5 separates from the second pressure relief hole section 3212, the cross section of the orifice 33 is smaller, and the cross section of the pressure relief hole 321 is larger, allowing the fluid between the first valve core 3 and the valve core mating member 2 to flow out rapidly. When the pressure difference is formed between the first pressure-bearing surface 34 of the first valve core 3 and the second pressure-bearing surface 35 of the first valve core 3, fluid pressure urges the first valve core 3 to move upward, and the first valve core 3 is opened. In this case, after flowing through the inlet 11, fluid can rapidly flow from the lower end of the first valve core 3 and the inner wall of the valve body 1 through the notch 22 to the outlet 12, and then the fluid flows out of the valve body 1 through the outlet 12. In other words, the flow path is the second path (as shown by an arrow B in FIG. 14).

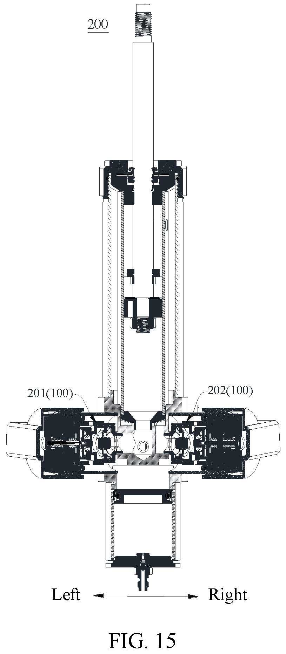

A shock absorber 200 according to an embodiment of a second aspect of the present disclosure, with reference to FIG. 15, includes the valve 100 according to the embodiment of the first aspect of the present disclosure.

For example, in an example shown in FIG. 15, in the shock absorber 200, when there are two valves 100, the two valves 100 are respectively located on two sides of a central axis of the shock absorber 200 in a left-right direction. The valve 100 on the left side may be a compression valve 201, and the valve 100 on the right side may be a rebound valve 202. When the shock absorber 200 is in a compressed state, fluid first flows through the compression valve 201 and then through the rebound valve 202. In a process of the fluid flowing through the compression valve 201, the compression valve 201 can adjust and control a damping force, and the rebound valve 202 only serves a communication function, and does not function as damping adjustment. When the shock absorber 200 is in a rebound state, fluid first flows through the rebound valve 202 and then through the compression valve 201. In a process of the fluid flowing through the rebound valve 202, the rebound valve 202 can adjust and control the damping force, and the compression valve 201 only serves a communication function and does not function as damping adjustment. In this way, fluid can flow back and forth through the compression valve 201 and the rebound valve 202 to achieve damping effect of the shock absorber 200. In addition, the compression valve 201 of the shock absorber 200 controls compression, and the rebound valve 202 controls rebound. The compression valve 201 and the rebound valve 202 are controlled and used separately without interfering with each other, and the damping force can be separately adjusted, thereby improving use performance of the shock absorber 200.

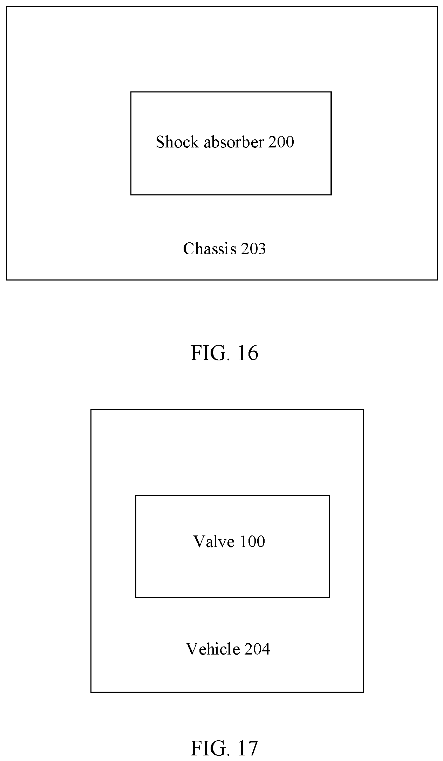

A chassis 203 according to an embodiment of a third aspect of the present disclosure, as shown in FIG. 16, includes the shock absorber 200 according to the embodiment of the second aspect of the present disclosure.

According to the chassis 203 of the present disclosure, use performance of the chassis 203 is improved by using the shock absorber 200.

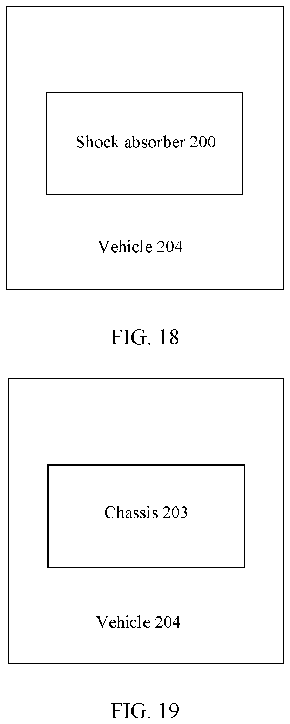

A vehicle 204 according to an embodiment of a fourth aspect of the present disclosure includes the valve 100 (as shown in FIG. 17) according to the embodiment of the first aspect of the present disclosure, the shock absorber 200 (as shown in FIG. 18) according to the embodiment of the second aspect of the present disclosure, or the chassis 203 according to the embodiment of the third aspect of the present disclosure (as shown in FIG. 19).

According to the vehicle 204 of the present disclosure, use performance of the vehicle 204 and ride comfort of the vehicle 204 are improved by using the valve 100, the shock absorber 200, or the chassis 203.

Other configurations and operations of the valve 100, the shock absorber 200, the chassis 203, and the vehicle 204 according to the embodiment of the present disclosure are known to a person of ordinary skill in the art. Details are not described herein again.

In the descriptions of the present disclosure, it should be understood that an orientation or position relationship indicated by the terms, for example, "center", "upper", "lower", "front", "back", "left", "right", "top", "bottom", "inner", "outer", "axial direction", "radial direction", and "circumferential direction", is based on an orientation or position relationship shown in the accompanying drawings. This is merely intended to facilitate description of the present disclosure and simplify the descriptions, but is not intended to indicate or imply that the referred apparatus or element needs to have a specific orientation and be constructed and operated in a specific orientation. Therefore, this cannot be understood as a limitation on the present disclosure.

In the descriptions of this specification, descriptions of reference terms such as "an embodiment", "some embodiments", "an example embodiment", "an example", "a specific example", or "some examples" means that a specific feature, a structure, a material, or a characteristic that is described with reference to the embodiment or the example is included in at least one embodiment or example of the present disclosure. In this specification, the schematic representations of the foregoing terms do not necessarily refer to a same embodiment or example.

Although embodiments of the present disclosure have been shown and described, a person of ordinary skill in the art may understand that various changes, modifications, replacements, variations may be made to these embodiments without departing from the principles and purposes of the present disclosure. The scope of the present disclosure is defined by the claims and equivalents thereof.

## Claims

1. A valve (100), comprising:
a valve body (1), wherein an inlet (11) and an outlet (12) are formed on the valve body (1);
a valve core mating member (2), wherein the valve core mating member (2) is disposed in the valve body (1);
a first valve core (3), wherein the first valve core (3) is movably disposed in the valve core mating member (2); and
an elastic member (4), wherein the elastic member (4) is disposed between the first valve core (3) and the valve core mating member (2), and the elastic member (4) normally urges the first valve core (3) toward the inlet (11) to normally block communication between the inlet (11) and the outlet (12).

2. The valve (100) according to claim 1, wherein an accommodation groove (31) is formed on a surface on a side that is of the first valve core (3) and that is away from the inlet (11), and the elastic member (4) abuts between a bottom wall of the accommodation groove (31) and the valve core mating member (2).

3. The valve (100) according to claim 2, wherein an outer circumferential surface of the first valve core (3) slidably and sealingly fits with an inner circumferential surface of the valve core mating member (2) in a moving direction of the first valve core (3), and the outer circumferential surface of the first valve core (3) is located on an outer circumferential side of the accommodation groove (31).

4. The valve (100) according to claim 2 or 3, wherein a guide hole (21) is formed on the valve core mating member (2), and the guide hole (21) is located on a side that is of the valve core mating member (2) and that is away from the inlet (11); and
a guide portion (32) extending in the moving direction of the first valve core (3) is disposed in the accommodation groove (31), an end that is of the guide portion (32) and that is away from the inlet (11) is slidably and sealingly fitted in the guide hole (21), and the elastic member (4) is sleeved on an outer circumferential side of the guide portion (32).

5. The valve (100) according to claim 4, wherein an orifice (33) is formed on the first valve core (3), and the inlet (11) communicates with an interior of the valve core mating member (2) through the orifice (33); and
a pressure relief hole (321) is formed on the guide portion (32), and the interior of the valve core mating member (2) communicates with the outlet (12) through the pressure relief hole (321).

6. The valve (100) according to claim 5, wherein a cross-sectional area of the orifice (33) is less than a cross-sectional area of the pressure relief hole (321).

7. The valve (100) according to claim 5 or 6, wherein the pressure relief hole (321) comprises:
at least one first pressure relief hole section (3211), wherein the first pressure relief hole section (3211) extends in a radial direction of the guide portion (32), and the first pressure relief hole section (3211) penetrates an outer circumferential surface of the guide portion (32) and communicates with the interior of the valve core mating member (2); and
a second pressure relief hole section (3212), wherein one end of the second pressure relief hole section (3212) penetrates an end face of an end that is of the guide portion (32) and that is away from the inlet (11) and communicates with the outlet (12), and the other end of the second pressure relief hole section (3212) communicates with the first pressure relief hole section (3211).

8. The valve (100) according to any one of claims 5 to 7, further comprising:
a second valve core (5), wherein the second valve core (5) is movably disposed on a side that is of the valve body (1) and that is away from the inlet (11), an end of the second valve core (5) detachably fits with the pressure relief hole (321) to establish and block communication between the orifice (33) and the outlet (12), and the second valve core (5) is adapted to urge the first valve core (3) toward the inlet (11) to block the communication between the inlet (11) and the outlet (12).

9. The valve (100) according to claim 8, wherein an inner wall surface of an end that is of the pressure relief hole (321) and that is adjacent to the second valve core (5) is inclined and extends in a direction away from the inlet (11) and away from a central axis of the second valve core (5); and
an end face of an end that is of the second valve core (5) and that is adjacent to the pressure relief hole (321) is formed as a spherical surface.

10. The valve (100) according to claim 8 or 9, wherein the second valve core (5) is a valve stem (51).

11. The valve (100) according to any one of claims 8 to 10, further comprising:
a drive assembly (6), wherein the drive assembly (6) is disposed on the valve body (1), and when the drive assembly (6) operates, the drive assembly (6) drives the second valve core (5) to detachably fit with the first valve core (3).

12. The valve (100) according to claim 11, wherein the drive assembly (6) comprises:
a fixed iron core (61), wherein the fixed iron core (61) is disposed on the valve body (1); and
a movable iron core (62), wherein the movable iron core (62) is movably disposed on a side that is of the fixed iron core (61) and that is away from the first valve core (3) in the moving direction of the first valve core (3), and the second valve core (5) is fastened to the movable iron core (62).

13. The valve (100) according to claim 12, wherein the valve core mating member (2) is fitted in the fixed iron core (61), at least one via (611) is formed on the fixed iron core (61), and the pressure relief hole (321) communicates with the outlet (12) through the via (611).

14. The valve (100) according to claim 12 or 13, wherein at least one flow hole (612) is formed on the fixed iron core (61); and
the drive assembly (6) further comprises:
an iron core cover (63), wherein the iron core cover (63) is disposed on the movable iron core (62), the iron core cover (63) and the movable iron core (62) jointly define a movable iron core cavity (631), the movable iron core (62) is movably disposed in the movable iron core cavity (631), and the pressure relief hole (321) communicates with the movable iron core cavity (631) through the flow hole (612).

15. The valve (100) according to any one of claims 1 to 14, wherein the first valve core (3) has a first pressure-bearing surface (34) and a second pressure-bearing surface (35), the second pressure-bearing surface (35) is located on a side that is of the first pressure-bearing surface (34) and that is away from the inlet (11), and the first valve core (3) is constructed such that when pressure on the first pressure-bearing surface (34) is greater than pressure on the second pressure-bearing surface (35), the first valve core (3) separates from a side surface on which the inlet (11) of the valve body (1) is located to communicate the inlet (11) with the outlet (12).

16. The valve (100) according to any one of claims 1 to 15, wherein a flow area of the outlet (12) is greater than a maximum flow area present when the first valve core (3) is separated from the side surface on which the inlet (11) of the valve body (1) is located.

17. The valve (100) according to any one of claims 1 to 16, wherein at least one notch (22) is formed on a side surface of an end that is of the valve core mating member (2) and that faces the inlet (11), and when the first valve core (3) is separated from the side surface on which the inlet (11) of the valve body (1) is located, the inlet (11) communicates with the outlet (12) through the notch (22).

18. The valve (100) according to any one of claims 1 to 17, wherein a protrusion (13) extending toward the first valve core (3) is provided at an outer circumferential edge of the inlet (11), and an end face of an end that is of the first valve core (3) and that is adjacent to the inlet (11) detachably fits with the protrusion (13).

19. A shock absorber (200), comprising the valve (100) according to any one of claims 1 to 18.

20. A chassis (203), comprising the shock absorber (200) according to claim 19.

21. A vehicle (204), comprising the valve (100) according to any one of claims 1 to 18, the shock absorber (200) according to claim 19, or the chassis (203) according to claim 20.
